# EUROPEAN PATENT SPECIFICATION

(11) **EP 3 965 388 B1**
(45) Date of publication and mention of the grant of the patent: **11.11.2026**
(21) Application number: 20194838.7
(22) Date of filing: 07.09.2020
(51) Int. Cl.: H04W 12/06, H04W 12/40, H04W 4/40

(54) **METHOD FOR SECURING A COMMUNICATION PATH WITHIN A MOTOR VEHICLE**
VERFAHREN ZUR SICHERUNG EINES KOMMUNIKATIONSWEGES IN EINEM KRAFTFAHRZEUG
PROCÉDÉ DE SÉCURISATION D'UN CHEMIN DE COMMUNICATION DANS UN VÉHICULE À MOTEUR

(43) Date of publication of application: 09.03.2022
(73) Proprietor: VOLKSWAGEN AG, 38440 Wolfsburg (DE)
(72) Inventor: van Kasteren, Jarno, 5688 TZ Oirschot (NL)

(56) References cited:
- US-A1- 2012 159 170
- US-A1- 2014 079 217
- US-A1- 2015 289 135
- US-A1- 2017 180 126

## Description

The present invention relates to a method and system for securing a communication path within a motor vehicle.

Today vehicle manufacturers often offer their customers the use of data that customers may use for services provided or by free web surfing within the vehicle. The Internet connection is provided by the vehicle itself. Not only for reasons of data protection law, but also and in particular for security-related aspects, it is necessary to ensure that communication between users or user terminals and service providers within a vehicle are securely encrypted.

Methods for encrypting communication paths between users or user terminals and service providers are known from the state of the art, but the known methods are either not secure enough or are technically too complex and therefore associated with high costs or are too inconvenient for users. In addition, the known methods for securing a communication path within a motor vehicle are often too inflexible with regard to changing the encryption parameters with regard to the various services used.

US 2012/0159170 A1 describes a vehicle communication authentication system configured to perform mutual authentication with an authentication subject by performing a user subscriber identify module (USIM)-based authentication protocol in a wireless network The system is configured to mount a USIM card in which mutual authentication is succeeded in a vehicle terminal, and to perform authentication of vehicle communication with a server that provides a vehicle service.

US 2014/0079217 A1 describes a method for establishing secure wireless communications between a mobile device and a vehicle, where a telematics system is used to bootstrap the trust between the mobile device and the vehicle. A user initiates the process by pressing a button on the mobile device to request pairing. The vehicle uses its secure OnStar cellular communication link to verify the mobile device with the OnStar server, which generates and sends a session key to the vehicle via the vehicle-OnStar cellular connection, and also sends the session key to the mobile device via the device's own cellular connection. The session key serves as a shared secret, such that the vehicle can issue a secrecy challenge to the mobile device. When the mobile device responds appropriately, a trusted wireless communications link can be established between the mobile device and the vehicle.

US 2015/0289135 A1 describes a method for mutual authentication between a terminal and a remote server by means of a third-party portal. Signed information is transmitted to the remote server by means of the portal, after which the security element is authenticated in the remote server. A value signed by the remote server is then transmitted to the application by means of the portal, as well as a request for verification of the signed value from the application to the security element; In the security element, the signature of the remote server and whether the requested service has been granted by the remote server is verified and a secure connection with the remote server using the security element is established.

Therefore, it is the objective of the present invention to at least partially eliminate the disadvantages described above. In particular, it is the objective of the present invention to provide a method as well as a system for securing a communication path within a motor vehicle, which is technically simple and inexpensive to implement, offers a high degree of user comfort and is flexible with regard to changing the connections to be encrypted.

The above issue is solved by a method with the features of claim 1 and a system according to claim 10. Further features and details of embodiments of the invention are presented in the dependent claims, the description and the drawings. Technical features which are disclosed for the method are also valid in connection with the system and vice versa.

The method in accordance with the invention for securing a communication path within a motor vehicle comprises receiving, by a connection unit, a user request from a user and/or a user terminal (4), the user request being for using a service provided within a motor vehicle, retrieving connection parameters for connecting a user and/or a user terminal by means of the connection unit on the basis of the user request, creating, by a backend server, a connection between the user and/or the user terminal and the backend server by means of the connection unit on the basis of the retrieved connection parameters, the connection being for enabling execution of the requested service, executing, by an authentication system, authentication to ensure secure communication between the user and/or the user terminal and a backend server for using services provided within a motor vehicle, and sending a message from the connection unit to the user and/or the user terminal on the basis of the authentication.

A motor vehicle is to be understood as any motorized vehicle such as a passenger car, a truck, a ship, an excavator, a harvester, a crane or an airplane. However, it is also possible to use the method according to the invention in cranes, excavators, ships or flying objects. Within the scope of the invention, security may be understood as an encryption which allows communication without the possibility of information being seen and/or stolen by third parties.

Within the scope of the invention, a service made available *"within"* a motor vehicle may in particular be understood as a service made available *"via"* a motor vehicle (via an Internet connection of the motor vehicle). In the context of the invention, a service may be understood as a vehicle-specific service, an entertainment service or simply free web access. A vehicle-specific service may, for example, automatically alert rescue services in the event of an accident and - if necessary - guide them to the scene of the accident via GPS. A vehicle-specific service may also use a smartphone or tablet to connect to a vehicle in order to be able to quickly locate the vehicle, unlock or lock the vehicle using the terminal device, or switch on a parking heater or air conditioning system or similar remotely. Entertainment services may in particular be streaming services for videos, audio books, podcasts, newspapers or weather applications or the like.

After a user enquiry for the use of a service provided within a motor vehicle has been sent and before connection parameters for connecting the user and/or user terminal device have been called up by means of the connection unit, the user enquiry may be received, for example, by a server of the connection unit. The sending of a message from the connection unit to the user and/or the user terminal device on the basis of authentication, as provided for in some embodiments of the present method, may be intended in particular to inform the user or the user terminal device that an encrypted connection exists, via which communication may now take place without hesitation. It is also conceivable that the user and/or the user terminal device may be informed by the connection unit, by sending a message, that no secure connection exists and that secure communication is therefore not possible. Individual procedural steps of embodiments of the method may be carried out in the order listed, but may also deviate at least partially from the proposed order. It is also conceivable that one or more steps are executed repeatedly, in particular cyclically.

In some embodiments, in the context of a fast, technically simple and secure processing of the user request within the connection unit, the retrieval of connection parameters for connecting the user and/or user terminal device may take place by reading out an assignment table. The assignment table may be in the form of a vehicle transaction type list. A vehicle transaction type list may in particular be understood here as a list which may be stored within the vehicle or externally, in which specific connection parameters of users or user terminals are stored. The Vehicle-Transaction Type List may preferably comprise entries for all or a large number of persons travelling in a vehicle and all or a large number of the user terminals used in the vehicle. The specific connection parameters may be formed in particular in the form of Wide Area Network parameters (WAN parameters), Uniform Resource Locator parameters (URL parameters-), Transport Layer Security parameters (TLS parameters) or similar.

In some embodiments, with a view to fast and uncomplicated processing, when connection parameters for connecting the user and/or user terminal are retrieved, it is checked whether an entry exists in an assignment table for the user and/or user terminal, establishing a connection between the user and/or the user terminal and a backend server.

In some embodiments, in the context of a particularly user-friendly execution of the method, it is conceivable that the execution of a registration procedure is provided for. The registration procedure may comprise the entry of a user and/or a specific user terminal into an assignment table for establishing a connection between the user and/or user terminal and the backend server. Such a registration procedure is particularly beneficial in the context of an initial introduction or a vehicle sale or a vehicle transfer, in order to be able to introduce persons who were not initially considered.

In some embodiments, within the scope of a compact design that is as centrally controlled as possible and particularly flexible processing, it is conceivable that communication is established via an entity within the motor vehicle configured for mobile communication, hereinafter referred to as mobile communication unit. In such embodiments, Internet-connectivity may be established via an embedded Subscriber Identity Module (eSIM) card. By using an eSIM, it is possible, for example, to easily create a plurality of different profiles, which may be reconfigured later as desired.

In some embodiments, in the context of a simple and fast creation of a connection between a user and/or a user terminal with a backend server, the creation of a connection between the user and/or the user terminal with a backend server for the execution of the requested service may take place by resolving the associated URLs by means of the connection unit via the use of a Domain Name System (DNS) service. The use of such DNS service indicates the location of the resource in question, in particular of the backend-server.

In some embodiments, in order to provide fast and structured authentication, the execution of authentication to ensure secure communication between a user and/or a user terminal and a backend server may include the generation of local end points (Domain Sockets) for the communication of the connection unit with a TLS sandbox.

Similarly, in some embodiments, in the context of fast and structured authentication, it is conceivable that executing authentication to ensure secure communication between a user and/or a user terminal and a backend server may involve sending a request for a TLS endpoint of a TLS sandbox. Within the scope of such a request, in particular TLS properties and the identifiers (ID's) of the local end points (Domain-Socket ID's) may be transmitted and exchanged.

In some embodiments, in order to ensure the most secure communication between a user and/or a user terminal and a service provider, it is conceivable that executing authentication to ensure secure communication between a user and/or a user terminal and a backend server may involve querying TLS credentials. The TLS credentials may be queried from a trusted archive. The retrieval of TLS credentials from a trustworthy archive may be done in particular via a further gateway.

Similarly, in some embodiments, in the context of a simultaneously simple, fast and secure communication between a user and/or a user terminal and a service provider, it is conceivable that performing authentication to ensure secure communication between a user and/or user terminal and a backend server may include performing a TLS handshake procedure before initiating bi-directional data transmission.

Embodiments of the invention further relate to a system for securing a communication path within a motor vehicle, in particular for carrying out embodiments of the method described above. The system comprises a connection unit configured to receive a user request for the use of a service provided within a motor vehicle, an assignment table configured to retrieve connection parameters for connecting a user and/or a user terminal on the basis of the user request, a backend server configured to establish a connection with the user and/or the user terminal for executing the requested service on the basis of the retrieved connection parameters, an authentication system configured to execute authentication between the user and/or the user terminal and a backend server for using services provided within a motor vehicle. Thus, the system provides the same benefits as those described with reference to embodiments of the method described above.

In some embodiments, the connection unit is formed in the form of a SOCKet Secure (SOCKS) gateway.

In some embodiments, with a view to simple, flexible and secure authentication, the authentication system may include a TLS sandbox for encrypting data to be transmitted. In addition, an encryption unit for performing a TLS handshake procedure may be provided, which may be connected to a key storage unit, e.g. via a further gateway. The encryption unit may be integrated into the TLS sandbox.

In some embodiments, within the scope of a compact design which is as centrally controlled as possible and a particularly flexible processing, it is conceivable that a mobile communication unit is provided for communication within the motor vehicle. The mobile communication unit may comprise an eSIM card for establishing Internet connectivity.

Embodiments of the invention further relate to a motor vehicle. The motor vehicle may be designed for carrying out one or more embodiments of the method described above. Additionally, or alternatively, the motor vehicle may comprise one or more embodiments of the system described above.

Further benefits, features and details of embodiments of the invention will be presented in the following description, in which, with reference to the drawings, examples of how embodiments of the invention may be implemented are described.

It is shown below:
- Fig. 1: schematic representation of a method for securing a communication path within a motor vehicle according to an embodiment of the invention,
- Fig. 2: schematic representation of a system for securing a communication path within a motor vehicle according to an embodiment of the invention,
- Fig. 3: schematic representation of a motor vehicle comprising a system for securing a communication path within the motor vehicle according to an embodiment of the invention.

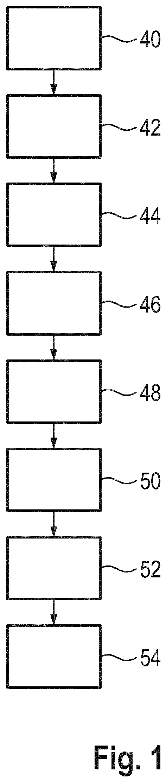

Fig. 1 shows a schematic representation of a method for securing a communication path within a motor vehicle 26 according to an embodiment of the invention.

The method for securing a communication path within a motor vehicle 26 comprises receiving 40 a user request for the use of a service provided within a motor vehicle 26 by a connection unit 6 from a user 4 and/or a user terminal 4, retrieving 42 connection parameters for connecting the user 4 and/or the user terminal 4 by means of the connection unit 6 on the basis of the user request, creating 44 a connection between the user 4 and/or the user terminal 4 and a backend server 10 for executing, in particular for enabling execution of, the requested service on the basis of the retrieved connection parameters by means of the connection unit 6, executing 46, 48, 50, 52 an authentication to ensure secure communication between the user 4 and/or the user terminal 4 and a backend-server 10 to use services provided within a motor vehicle 26 and sending 54 a message from the connection unit 6 to the user 4 and/or the user terminal 4 based on the authentication.

The retrieval of connection parameters for the connection of a user 4 and/or a user terminal 4 may be done by reading out an assignment table 8. The assignment table 8 may be in the form of a vehicle transaction type list.

In some embodiments, a check is made whether an entry exists in an assignment table 8 for a user 4 and/or a specific user terminal 4, establishing a connection between a user 4 and/or a user terminal 4 with a backend server 10.

In some embodiments, in particular for users not yet registered, the execution of a registration procedure may be carried out. The registration procedure may comprise the entry of a user 4 and/or a specific user terminal 4 in an assignment table 8 for establishing a connection between the user 4 and/or the user terminal 4 with a backend server 10.

Communication may be established via a mobile communication unit of the motor vehicle. Internet connectivity may then be established via an eSIM card.

The creation of a connection between a user 4 and/or a user terminal 4 with a backend server 10 for the execution of the requested service may also be achieved by resolving the associated URLs using connection unit 6 via the use of a DNS service.

Executing 46, 48, 50, 52 authentication to ensure secure communications between a user 4 and/or a user terminal 4 and a backend-server 10 may include generating 46 local endpoints for communication of the connection unit 6 with a TLS Sandbox 12.

In addition, executing 46, 48, 50, 52 authentication to ensure secure communications between a user 4 and/or a user terminal 4 and a backend server 10 may include sending 48 a request for a TLS endpoint of a TLS-Sandbox 12.

It is also conceivable that executing 46, 48, 50, 52 an authentication to ensure secure communication between a user 4 and/or a user terminal 4 and a backend server 10 involves querying 50 TLS-credentials, whereby the TLS credentials may be queried from a trusted archive 18.

It is also conceivable that executing 46, 48, 50, 52 an authentication to ensure secure communication between a user 4 and/or a user terminal 4 and a backend server 10 involves executing 52 a TLS-handshake-procedure before starting a bi-directional data transmission.

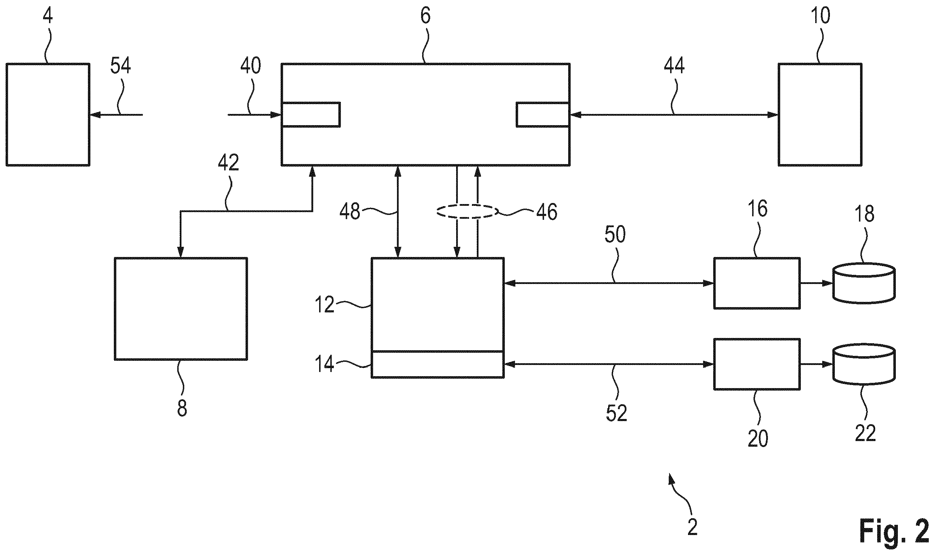

Fig. 2 shows a schematic representation of a system 2 for securing a communication path within a motor vehicle 26 according to an embodiment of the invention.

The system 2 comprises a connection unit 6 for receiving a user request to use a service provided within the motor vehicle 26, an assignment table 8, typically stored in a suitable memory, for retrieving 42 connection parameters for connecting a user 4 and/or a user terminal 4 by means of the connection unit 6 on the basis of the user request, a backend server 10 for establishing 44 a connection with the user 4 and/or the user terminal 4 executing the requested service based on the retrieved connection parameters, and an authentication system 12, 14, 16, 18, 20, 22 for executing 46, 48, 50, 52 authentication to ensure secure communication between a user 4 and/or a user terminal 4 and a backend-server 10 to use services provided within a motor vehicle 26.

The connection unit 6 may be formed in particular in the form of a SOCKS gateway.

In the embodiment depicted in Fig. 2, the authentication system 12, 14, 16, 18, 20, 22 includes a TLS Sandbox 12 for the encryption of data to be transmitted. The TLS sandbox 12 is intended for querying 50 TLS credentials, which it queries from a trusted archive 18 via a gateway 16. Furthermore, an encryption unit 14 integrated in the TLS sandbox 12 may be used to execute a TLS-handshake procedure in which keys may be generated from a key storage unit 22 via a gateway 20.

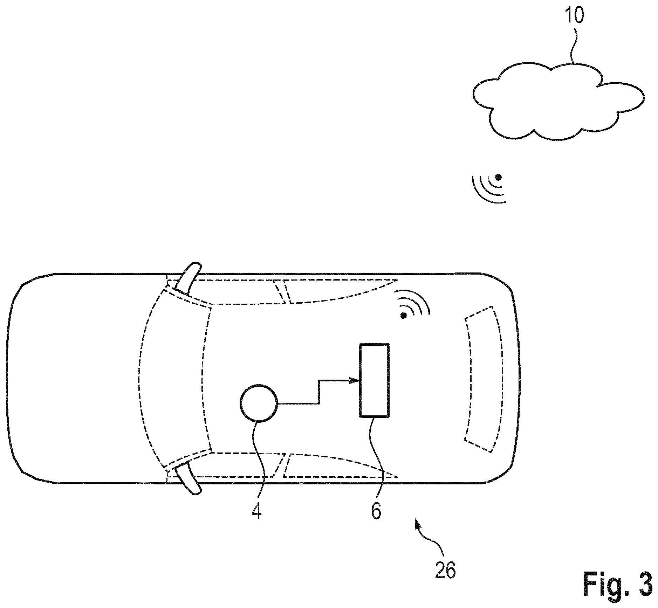

Fig. 3 shows a schematic representation of a motor vehicle 26.. The motor vehicle 26 may comprise, at least partially, embodiments of the system 2 depicted in and described with reference to Fig. 2.

The system 2 may be arranged at least partially within the vehicle 26 so that a request from a user 4 or a user terminal 4 may be received by a connection unit 6 arranged within the vehicle 26. It is understood that the connection unit 6 and/or another component of the system 2 may also be arranged remotely and may accordingly be reached via wireless communication. In the present case, a rewriting or entry into an assignment table 8, which is intended to define a connection to certain service providers for a user 4 and/or a specific user terminal 4, may be made via a communication with a backend server 10, for example a server of a vehicle manufacturer.

Embodiments of the method and system described above provide in a technically simple and cost-effective manner a particularly convenient possibility of secure communication within a motor vehicle 26, which in particular allows a high degree of flexibility with regard to the encryption of communication paths for different service providers.

### List of reference signs

- 2: System for securing a communication path
- 4: User/user terminal
- 6: Connection unit
- 8: Assignment table
- 10: Backend server
- 12: TLS Sandbox
- 14: Encryption unit
- 16: Gateway
- 18: trusted archive
- 20: Gateway
- 22: Key Storage Unit
- 26: Motor vehicle

- 40: Sending a user request
- 42: Retrieving connection parameters
- 44: Creating a connection
- 46: Generating local endpoints
- 48: Sending a request for a TLS endpoint
- 50: Querying TLS credentials
- 52: Executing a TLS handshake procedure
- 54: Sending a message

## Claims

1. A method for securing a communication path within a motor vehicle (26), the method comprising
- Receiving (40), by a connection unit (6), a user request from a user terminal (4), the user request being for using a service provided within a motor vehicle (26),
- Retrieving (42) connection parameters for connecting the user terminal (4) by means of the connection unit (6) on the basis of the user request,
- Creating (44), by means of the connection unit (6) on the basis of the retrieved connection parameters, a connection between the user terminal (4) and the backend server (10), the connection being for enabling execution of the requested service,
- Executing (46, 48, 50, 52), by an authentication system (12, 14, 16, 18, 20, 22), an authentication between the user terminal (4) and the backend server (10) for the use of services provided within a motor vehicle (26), wherein the authentication is executed by sending (48) by the connection unit (6) a request for a local TLS endpoint of a TLS sandbox (12) and generating (46) the local TLS endpoint for communication between the connection unit (6) and the TLS sandbox (12), wherein the TLS sandbox (12) is used for encryption of data to be transmitted and for querying (50) TLS credentials from a trusted archive (18) via a gateway,
- Sending (54) a message from the connection unit (6) to the user terminal (4) based on the authentication.

2. Method according to claim 1,
wherein
the retrieval (42) of connection parameters for connecting the user (4) and/or the user terminal (4) takes place by reading out an assignment table (8), the assignment table (8) being in the form of a vehicle transaction type list.

3. Method according to claim 1 or 2,
wherein
after retrieval (42) of connection parameters for connecting the user terminal (4), the method further comprises carrying out a check to determine whether an entry exists in the assignment table (8) for the user terminal (4), establishing a connection between the user terminal (4) with a backend server (10).

4. Method according to one of the preceding claims,
wherein
the method further comprises providing the execution of a registration procedure, wherein the registration procedure preferably comprises entering a user terminal (4) in the assignment table (8) for establishing a connection between the user terminal (4) with a backend server (10).

5. Method according to one of the preceding claims,
wherein
the creation (44) of a connection between the user terminal (4) with a backend server (10) for enabling execution of the requested service takes place by resolving the associated URLs associated with the backend server (10) and the user terminal (4) by means of the connection unit (6) via the use of a DNS service.

6. Method according to one of the preceding claims,
wherein
the execution (46, 48, 50, 52) of an authentication for ensuring secure communication between a user terminal (4) and a backend server (10) comprises the execution (52) of a TLS handshake procedure before a bidirectional data transmission is started.

7. System (2) for securing a communication path within a motor vehicle (26), in particular for carrying out a method according to claims 1 to 6, the system comprising
- a connection unit (6) configured to receive (40) a user request to use a service provided within the motor vehicle (26) and to create (44) a connection between a user terminal (4) and a backend server (10) for enabling execution of the requested service on the basis of retrieved connection parameters,
- an assignment table (8) configured to retrieve (42) the connection parameters for connecting the user terminal (4) on the basis of the user request,
- an authentication system (12, 14, 16, 18, 20, 22) configured to carry out (46, 48, 50, 52) an authentication between the user terminal (4) and the backend server (10) for using services provided within a motor vehicle (26), wherein the authentication system (12, 14, 16, 18, 20, 22) comprises a TLS sandbox (12) for encrypting data to be transmitted and for querying (50) TLS credentials from a trusted archive (18) via a gateway, and
- wherein the connection unit is further configured to send a request for a local TLS endpoint of a TLS sandbox and in response the local TLS endpoint is generated for communication between the connection unit and the TLS sandbox to enable execution of the authentication.

8. System (2) according to claim 7,
wherein
the connection unit (6) takes the form of a SOCKS gateway.

9. System (2) according to one of the claims 7 or 8,
wherein
a mobile communication unit is provided for communication within the motor vehicle (26), the mobile communication unit preferably comprising an eSIM card for establishing Internet connectivity.

10. Motor vehicle (26) comprising a system (2) according to one of claims 7 to 9.

## Patentansprüche

1. Verfahren zum Sichern eines Kommunikationspfads innerhalb eines Kraftfahrzeugs (26), das Verfahren umfassend
- Empfangen (40), durch eine Verbindungseinheit (6), einer Benutzeranforderung von einem Benutzerendgerät (4), wobei die Benutzeranforderung zum Nutzen eines innerhalb eines Motorfahrzeugs (26) bereitgestellten Dienstes ist,
- Abrufen (42) von Verbindungsparametern zum Verbinden des Benutzerendgeräts (4) mittels der Verbindungseinheit (6) auf Basis der Benutzeranforderung,
- Herstellen (44), mittels der Verbindungseinheit (6) auf Basis der abgerufenen Verbindungsparameter, einer Verbindung zwischen dem Benutzerendgerät (4) und dem Backend-Server (10), wobei die Verbindung dazu dient, eine Ausführung des angeforderten Dienstes zu ermöglichen,
- Ausführen (46, 48, 50, 52), durch ein Authentifizierungssystem (12, 14, 16, 18, 20, 22), einer Authentifizierung zwischen dem Benutzerendgerät (4) und dem Backend-Server (10) für die Nutzung von innerhalb eines Motorfahrzeugs (26) bereitgestellten Diensten, wobei die Authentifizierung ausgeführt wird durch Senden (48), durch die Verbindungseinheit (6), einer Anforderung für einen lokalen TLS-Endpunkt einer TLS-Sandbox (12) und Erzeugen (46) des lokalen TLS-Endpunkts zur Kommunikation zwischen der Verbindungseinheit (6) und der TLS-Sandbox (12), wobei die TLS-Sandbox (12) zur Verschlüsselung von zu übertragenden Daten und zum Abfragen (50) von TLS-Anmeldeinformationen aus einem vertrauenswürdigen Archiv (18) über ein Gateway genutzt wird,
- Senden (54) einer Nachricht von der Verbindungseinheit (6) an das Benutzerendgerät (4) basierend auf der Authentifizierung.

2. Verfahren nach Anspruch 1,
wobei
der Abruf (42) von Verbindungsparametern zum Verbinden des Benutzers (4) und/oder des Benutzerendgeräts (4) durch Auslesen einer Zuordnungstabelle (8) erfolgt, wobei die Zuordnungstabelle (8) in Form einer Fahrzeugtransaktionstypenliste ist.

3. Verfahren nach Anspruch 1 oder 2,
wobei
nach Abruf (42) von Verbindungsparametern zum Verbinden des Benutzerendgeräts (4), das Verfahren ferner das Durchführen einer Prüfung umfasst, um zu bestimmen, ob ein Eintrag in der Zuordnungstabelle (8) für das Benutzerendgerät (4) existiert, der eine Verbindung zwischen dem Benutzerendgerät (4) und einem Backend-Server (10) einrichtet.

4. Verfahren nach einem der vorstehenden Ansprüche,
wobei
das Verfahren ferner das Bereitstellen der Ausführung eines Registrierungsvorgangs umfasst, wobei der Registrierungsvorgang vorzugsweise das Eintragen eines Benutzerendgeräts (4) in die Zuordnungstabelle (8) zum Einrichten einer Verbindung zwischen dem Benutzerendgerät (4) und einem Backend-Server (10) umfasst.

5. Verfahren nach einem der vorstehenden Ansprüche,
wobei
die Herstellung (44) einer Verbindung zwischen dem Benutzerendgerät (4) und einem Backend-Server (10) zum Ermöglichen einer Ausführung des angeforderten Dienstes durch Auflösen der zugehörigen URLs, die dem Backend-Server (10) und dem Benutzerendgerät (4) zugehörig sind, mittels der Verbindungseinheit (6) über die Nutzung eines DNS-Dienstes erfolgt.

6. Verfahren nach einem der vorstehenden Ansprüche,
wobei
die Ausführung (46, 48, 50, 52) einer Authentifizierung zum Sicherstellen einer sicheren Kommunikation zwischen einem Benutzerendgerät (4) und einem Backend-Server (10) die Ausführung (52) eines TLS-Handshake-Vorgangs umfasst, bevor eine bidirektionale Datenübertragung gestartet wird.

7. System (2) zum Sichern eines Kommunikationspfads innerhalb eines Motorfahrzeugs (26), insbesondere zum Durchführen eines Verfahrens nach den Ansprüchen 1 bis 6, das System umfassend
- eine Verbindungseinheit (6), die konfiguriert ist, um eine Benutzeranforderung zur Nutzung eines innerhalb des Motorfahrzeugs (26) bereitgestellten Dienstes zu empfangen (40) und eine Verbindung zwischen einem Benutzerendgerät (4) und einem Backend-Server (10) herzustellen (44), um eine Ausführung des angeforderten Dienstes auf Basis abgerufener Verbindungsparameter zu ermöglichen,
- eine Zuordnungstabelle (8), die konfiguriert ist, um die Verbindungsparameter zum Verbinden des Benutzerendgeräts (4) auf Basis der Benutzeranforderung abzurufen (42),
- ein Authentifizierungssystem (12, 14, 16, 18, 20, 22), das konfiguriert ist, um eine Authentifizierung zwischen dem Benutzerendgerät (4) und dem Backend-Server (10) zum Nutzen von innerhalb eines Motorfahrzeugs (26) bereitgestellten Diensten auszuführen (46, 48, 50, 52), wobei das Authentifizierungssystem (12, 14, 16, 18, 20, 22) eine TLS-Sandbox (12) zum Verschlüsseln von zu übertragenden Daten und zum Abfragen (50) von TLS-Anmeldeinformationen aus einem vertrauenswürdigen Archiv (18) über ein Gateway umfasst, und
- wobei die Verbindungseinheit ferner konfiguriert ist, um eine Anforderung für einen lokalen TLS-Endpunkt einer TLS-Sandbox zu senden, und als Reaktion darauf der lokale TLS-Endpunkt für eine Kommunikation zwischen der Verbindungseinheit und der TLS-Sandbox erzeugt wird, um eine Ausführung der Authentifizierung zu ermöglichen.

8. System (2) nach Anspruch 7,
wobei
die Verbindungseinheit (6) in Form eines SOCKS-Gateways vorliegt.

9. System (2) nach einem der Ansprüche 7 oder 8,
wobei
eine mobile Kommunikationseinheit für eine Kommunikation innerhalb des Kraftfahrzeugs (26) bereitgestellt ist, wobei die mobile Kommunikationseinheit vorzugsweise eine eSIM-Karte zum Einrichten einer Internetkonnektivität umfasst.

10. Kraftfahrzeug (26), umfassend ein System (2) nach einem der Ansprüche 7 bis 9.

## Revendications

1. Procédé permettant de sécuriser un chemin de communication dans un véhicule automobile (26), le procédé comprenant
- la réception (40), par une unité de connexion (6), d'une demande utilisateur en provenance d'un terminal utilisateur (4), la demande utilisateur étant destinée à l'utilisation d'un service fourni dans un véhicule automobile (26),
- la récupération (42) de paramètres de connexion pour la connexion du terminal utilisateur (4) au moyen de l'unité de connexion (6) sur la base de la demande utilisateur,
- la création (44), au moyen de l'unité de connexion (6) sur la base des paramètres de connexion récupérés, d'une connexion entre le terminal utilisateur (4) et le serveur dorsal (10), la connexion étant destinée à permettre l'exécution du service demandé,
- l'exécution (46, 48, 50, 52), par un système d'authentification (12, 14, 16, 18, 20, 22), d'une authentification entre le terminal utilisateur (4) et le serveur dorsal (10) pour l'utilisation de services fournis dans un véhicule automobile (26), dans lequel l'authentification est exécutée par l'envoi (48), par l'unité de connexion (6), d'une demande pour un point de terminaison TLS local d'un bac à sable TLS (12) et la génération (46) du point de terminaison TLS local pour une communication entre l'unité de connexion (6) et le bac à sable TLS (12), dans lequel le bac à sable TLS (12) est utilisé pour le chiffrement de données à transmettre et pour l'interrogation (50) d'informations d'identification TLS à partir d'une archive de confiance (18) par l'intermédiaire d'une passerelle,
- l'envoi (54) d'un message de l'unité de connexion (6) au terminal utilisateur (4) sur la base de l'authentification.

2. Procédé selon la revendication 1,
dans lequel
la récupération (42) de paramètres de connexion pour connecter l'utilisateur (4) et/ou le terminal utilisateur (4) a lieu par la lecture d'une table d'affectation (8), la table d'affectation (8) étant sous la forme d'une liste de types de transaction de véhicule.

3. Procédé selon la revendication 1 ou 2,
dans lequel
après la récupération (42) de paramètres de connexion pour connecter le terminal utilisateur (4), le procédé comprend en outre la mise en œuvre d'une vérification pour déterminer si une entrée existe dans la table d'affectation (8) pour le terminal utilisateur (4), l'établissement d'une connexion entre le terminal utilisateur (4) et un serveur dorsal (10).

4. Procédé selon l'une des revendications précédentes,
dans lequel
le procédé comprend en outre l'exécution d'une procédure d'enregistrement, dans lequel la procédure d'enregistrement comprend de préférence l'entrée d'un terminal utilisateur (4) dans la table d'affectation (8) pour établir une connexion entre le terminal utilisateur (4) et un serveur dorsal (10).

5. Procédé selon l'une des revendications précédentes,
dans lequel
la création (44) d'une connexion entre le terminal utilisateur (4) et un serveur dorsal (10) pour permettre l'exécution du service demandé a lieu par la résolution des URL associées associées au serveur dorsal (10) et au terminal utilisateur (4) au moyen de l'unité de connexion (6) par l'intermédiaire de l'utilisation d'un service DNS.

6. Procédé selon l'une des revendications précédentes,
dans lequel
l'exécution (46, 48, 50, 52) d'une authentification pour assurer une communication sécurisée entre un terminal utilisateur (4) et un serveur dorsal (10) comprend l'exécution (52) d'une procédure d'établissement d'une liaison TLS avant qu'une transmission bidirectionnelle de données ne soit démarrée.

7. Système (2) destiné à sécuriser un chemin de communication dans un véhicule automobile (26), en particulier pour mettre en œuvre un procédé selon les revendications 1 à 6, le système comprenant
- une unité de connexion (6) configurée pour recevoir (40) une demande utilisateur pour utiliser un service fourni dans le véhicule automobile (26) et pour créer (44) une connexion entre un terminal utilisateur (4) et un serveur dorsal (10) pour permettre l'exécution du service demandé sur la base de paramètres de connexion récupérés,
- une table d'affectation (8) configurée pour récupérer (42) les paramètres de connexion pour connecter le terminal utilisateur (4) sur la base de la demande utilisateur,
- un système d'authentification (12, 14, 16, 18, 20, 22) configuré pour effectuer (46, 48, 50, 52) une authentification entre le terminal utilisateur (4) et le serveur dorsal (10) pour utiliser des services fournis dans un véhicule automobile (26), dans lequel le système d'authentification (12, 14, 16, 18, 20, 22) comprend un bac à sable TLS (12) pour chiffrer des données à transmettre et pour demander (50) des informations d'identification TLS à partir d'une archive de confiance (18) par l'intermédiaire d'une passerelle, et
- dans lequel l'unité de connexion est en outre configurée pour envoyer une demande pour un point de terminaison TLS local d'un bac à sable TLS et en réponse, le point de terminaison TLS local est généré pour une communication entre l'unité de connexion et le bac à sable TLS pour permettre l'exécution de l'authentification.

8. Système (2) selon la revendication 7,
dans lequel
l'unité de connexion (6) prend la forme d'une passerelle SOCKS.

9. Système (2) selon l'une des revendications 7 ou 8,
dans lequel
une unité de communication mobile est prévue pour une communication dans un véhicule automobile (26), l'unité de communication mobile comprenant de préférence une carte eSIM pour établir une connectivité Internet.

10. Véhicule automobile (26), comprenant un système (2) selon l'une quelconque des revendications 7 à 9.
